# EUROPEAN PATENT SPECIFICATION

(11) **EP 3 727 006 B1**
(45) Date of publication and mention of the grant of the patent: **30.07.2025**
(21) Application number: 18825701.8
(22) Date of filing: 20.12.2018
(51) Int. Cl.: A23D 7/005, A23D 7/01

(54) **PHYTOSTEROL COMPOSITIONS IN FOOD PRODUCTS**
PHYTOSTEROL-ZUSAMMENSETZUNGEN BEI NAHRUNGSMITTELN
COMPOSITIONS À BASE DE PHYTOSTÉROL DANS DES PRODUITS ALIMENTAIRES

(30) Priority: 22.12.2017 GB 201721720; 05.06.2018 GB 201809192
(43) Date of publication of application: 28.10.2020
(73) Proprietor: Katholieke Universiteit Leuven, 3000 Leuven (BE)
(72) Inventor: DAELS, Eva, 8500 Kortrijk (BE); FOUBERT, Imogen, 9112 Sinaai (BE)
(74) Representative: Arnold & Siedsma
(86) International application number: PCT/EP2018/086363
(87) International publication number: WO 2019/122227

(56) References cited:
- WO-A1-98/19556
- GB-A- 1 284 814
- US-A1- 2011 287 156
- GUSTAV PARMENTIER: "PHYTOSTEROLS AND PHYTOSTEROL ESTERS IN NUTRITION AND COSMETICS", 1 January 2014 (2014-01-01) - 2014, XP055554514, Retrieved from the Internet <URL:http://www.parmentier.de/gpfneu/Sterol_Esters.pdf> [retrieved on 20190211]
- MATTSON F H ET AL: "EFFECT OF PLANT STEROL ESTERS ON THE ABSORPTION OF DIETARY CHOLESTEROL", THE JOURNAL OF NUTRITION, AMERICAN SOCIETY FOR NUTRITION, US, vol. 107, 1 January 1977 (1977-01-01), pages 1139 - 1147, XP000864569, ISSN: 0022-3166

## Description

### Field of the invention

The invention relates to the preparation of food products, in particular fat blends. Further disclosed herein are methods of reducing the amount of hardstock in food products and the use of phytosterol esters.

### Background of the invention

Food manufacturers are currently looking for ways to formulate products with a better nutritional profile of the fat fraction (i.e. low in saturated fatty acids and high in unsaturated fatty acids) and preferably without the use of palm oil, but of course while keeping the same product quality characteristics [Patel, A. Edible oil structuring: Concept Methods and Applications, first edit.; The Royal Society of Chemistry, 2017]. This is however very challenging since fats rich in saturated fatty acids, (e.g. butter, coconut oil and palm oil) are solid at room temperature, while fats rich in unsaturated fatty acids, (e.g. olive oil) are liquid at room temperature. The main functional role of fats rich in saturated fatty acids is to provide the desired texture (e.g. hardness, spreadability) and mouth feel in food products [Patel et al. (2016) Food Funct. 7, 20-29].

Recently different strategies have been investigated for reducing the amount of saturated fats in food products. A first approach is the interesterification of the fat. This technology can lead to a limited reduction of the saturated fats. A second approach comprises the replacement of the saturated fats with liquid oil and a structuring agent, also called gelator. These compounds impart solid-fat functionality to the liquid oil by forming an interconnected network that converts the liquid oil into a gel-like material which is sometimes called oleogel or organogel [Marangoni et al. (2012) Soft Matter, 8, 1275-1300]. Although these gelators have been described in literature, no food products containing oleogels are currently on the market since each type of gelator has its limitations preventing its applications. The use of butter for spreading, baking and cooking is more and more replaced by the use of margarines, which are water-in-oil emulsions. Also for the formulation of margarines the quest to replace saturated and trans unsaturated fatty acids by unsaturated fatty acids is still ongoing.

The use of margarines as bread spread requires that the product can be stored as a homogenous emulsion in a refrigerator, is soft enough to be manipulated by a knife or the like and provides a certain mouthfeel when the margarine is consumed and reaches body temperature. To achieve these properties margarine contains partly hard fats (solid at room temperature) and oils (liquid at room temperature). The health aspects associated with the consumption of margarine are important. For health reasons, saturated and trans unsaturated fatty acids are preferably replaced by unhydrogenated monounsaturated and polyunsaturated fatty acids. Further margarines may also contain phytosterol based ingredients (stanol esters and sterol esters ) which are known to reduce the level of both total and especially low-density lipoprotein (LDL) cholesterol in blood when ingested in sufficiently high amounts. Because the normal dietary intake of phytosterols is not sufficient to induce a significant reduction of cholesterol in the blood, the incorporation of phytosterol based ingredients in margarines is a good method to administer higher amounts of phytosterols that are sufficient to benefit from their cholesterol-lowering properties [Salo, et al. (2003). In Gunstone (Ed.) Lipids for Functional Foods and Nutraceuticals. Bridgwater, England: The Oily Press]. The use of such products allows to use lower doses of statins while still obtaining the same amount of LDL cholesterol reduction in the blood (Marangoni & Poli (2010) Pharmacol. Res. 61, 193-169). Another beneficial property of phytosterols is that they are not absorbed into the body and therefore do not contribute to the energy uptake in the body.

Phytosterol esters are produced via esterification of phytosterols from plants with fatty acids which are also derived from plants. Phytosterol esters consist of approximately 60% by weight of phytosterols and 40% by weight of fatty acids. If the fatty acids are derived from common vegetable oils, the fatty acid composition of the phytosterol esters is similar to the vegetable oil used as a source of the fatty acids.

On a commercial scale phytosterols can be derived from vegetable oils and from wood. Plant stanols are only found in small amounts in nature and can be produced by hydrogenation of the commercially available phytosterols, which are mainly unsaturated. During hydrogenation the double bonds in the plant sterol molecules are saturated by the addition of hydrogen.

Stanol esters are then prepared by subsequent esterification of the plant stanol with a mixture of fatty acids also derived from plants. Phytosterol esters have similar medicinal properties as phytostanol esters, but have different physicochemical properties.

Because of their difference in melting profile stanol esters are preferred over sterol esters to be used as an ingredient in margarine since they can partly replace the hard fraction.

The use of phytosterol esters in fat blends still requires a substantial amount of hardstock to obtain a suitable product for the preparation of margarines and related products. WO9819556 discusses the properties of different fat blends with phytosterol esters and phytostanol esters. However in order to achieve a product with the desired properties (e.g. texture, consistency, mouth feel) commercial products enriched with phytosterols or phytostanols still contain considerable amounts of hardstock such as palm oil, and correlated therewith at least 20% of saturated fatty acids in the fat blend.

Despite the existence of phytosterols as a functional food ingredient for more than 20 years, there is still a need for margarine like compositions, with high phytosterol content but low amounts of saturated fats.

Due to the even lower solid fat content of compositions comprising phytosterol esters, these compounds have not been considered as alternatives for phytostanol esters to partially replace the hardstock and thereby lower the amount of saturated fatty acids in margarines. US20030068425 suggests the use of phytosterol esters in the preparation of confectionery such as chocolate.

US20110287156 discloses phytosterol ester compositions to improve shelf life and oxidative stability of food compositions. The document does not discriminate between phytosterol esters and phytostanol esters, and does not discuss hardstock (fat solid at 20 °C). GB1 284 814 A teaches emulsion preparation using phytosterol oleate although the composition does not appear to be suitable as a hardstock. Parmentier in "PHYTOSTEROLS AND PHYTOSTEROL ESTERS IN NUTRITION AND COSMETICS" (2014) mentions the use of phytosterols and phytostanol esters in emulsions but not in specific ways.

### Summary of the invention

The present invention is based on the finding that certain phytosterol esters (sitosterol esters) with a very low content of saturated fatty acids and with the desired LDL reducing properties have physicochemical properties comparable with fats with a high content of saturated fatty acids such as palm oil and palm stearin. This has the advantage that the use of this type of phytosterol ester in e.g. margarine does not need to be compensated by hardstock rich in saturated fatty acids.

The present invention further overcomes the need to convert phytosterols to phytostanols.

The conventional hardstock such as palm oil of fat-containing food products can be fully replaced by the specific type of sterol esters described in this invention which contain mainly unsaturated fatty acids. Consequently, the present invention has the advantage that the concentration of saturated fatty acids (present in hardstock) in e.g. margarine can be significantly decreased even to very low amounts, while still providing the necessary texture and the desired mouthfeel The present invention has the advantage that an oleic acid fatty acid chain of e.g. olive oil can be used in the phytosterolester, leading to an increase of unsaturated fatty acids.

The present invention has the further advantage that due to the higher phytosterol ester content of the products of the present invention less margarine needs to be consumed to obtain the advised dosage of 2,5 g phytosterol/phytostanol ester per day, or that by intake of the average margarine consumption of about 20 g/ day the chance of reaching the advised daily intake is increased.

The present invention provides products with a beneficial nutritional profile of the fat fraction (i.e. low in saturated fatty acids and high in unsaturated fatty acids), while keeping the same product quality characteristics.

The present invention provides products with a desired hardness and spreadability at low temperatures (refrigerator) and mouthfeel upon consumption.

The methods and compositions of the present invention allow reducing the amount of saturated fats in food products, without interesterification of fat, without use of gelators which form an interconnected network that converts a liquid oil into a gel-like material (oleogel or organogel).

The methods and compositions of the present invention allow reducing saturated and trans unsaturated fatty acids, while the product can be stored as a homogenous emulsion in a refrigerator, is soft enough to be manipulated by a knife or the like and provides a certain mouthfeel when the margarine is consumed and reaches body temperature.

The methods and compositions of the present invention enable to further increase daily intake of phytosterols which allows to use lower doses of statins while still obtaining the same amount of LDL cholesterol reduction in the blood.

The methods and compositions of the present invention allow to provide margarine like compositions, with high phytosterol content but low amounts of saturated fats.

The present invention is defined by the claims.

### Detailed description of the invention

**Figure 1****:** Chemical structure of β-sitosterol (Soupas et al. (2005) Eur. J. Lipid Sci. Technol. 107, 107-118.)
**Figure 2****:** β-sitosteryl oleate melting curve after tempering at 10°C for 72 hours
**Figure 3****:** WAXD pattern of β-sitosteryl oleate after tempering at 10°C for 72 hours
**Figure 4****:** SAXS pattern of β-sitosteryl oleate after tempering at 10°C for 72 hours
**Figure 5****:** Microscopy photo of the crystalline β-sitosteryl oleate network after tempering at 10°C for 72 hours. Black bar represents 100 µm.
**Figure 6****:** DSC melting curves of the blends of palm oil with β-sitosteryl oleate (PE oleate) after tempering at 10°C for 72h. The different curves represent different β-sitosteryl oleate concentrations. **Panel A** : pure palm oil to palm oil with 50% β-sitosteryl oleate. **Panel B** : Palm oil with 50 % β-sitosteryl oleate to pure β-sitosteryl oleate
**Figure 7****:** Average peak max. ± standard deviation (n=5) of the blends of palm oil with β-sitosteryl oleate after tempering at 10°C for 72h ff. concentration of β-sitosteryl oleate.
**Figure 8****:** Average melting enthalpy ± standard deviation (n=5) of the blends of palm oil with β-sitosteryl oleate after tempering at 10°C for 72 hours in ff. concentration of β-sitosteryl oleate.
**Figure 9****:** WAXD patterns of blends of palm oil with β-sitosteryl oleate after tempering at 10°C for 72 hours. The different curves represent the different concentrations of β-sitosteryl oleate.
**Figure 10****:** SAXS patterns of the blends of palm oil with β-sitosteryl oleate after tempering at 10°C for 72 hours. The different curves represent the different concentrations of β-sitosteryl oleate.
**Figure 11****:** Microscopy photos of the crystal network of the palm oil blends with β-sitosteryl oleate after temperature tempering at 10°C for 72 hours. Black bar represents 100 µm.
**Figure 12****:** SFC profiles of different margarines and blends of β-sitosteryl oleate with rapeseed oil.
**Figure 13****:** SFC profiles of sterol esters with fatty acids derived from sunflower oil and olive oil, palm oil and palm stearin.
**Figure 14****:** SFC profiles of blends of rapeseed oil with sterol esters with fatty acids derived from sunflower oil.
**Figure 15****:** SFC profiles of blends of rapeseed oil with sterol esters with fatty acids derived from olive oil.

### Definitions

**Edible spreadable emulsion** relates to fat comprising compositions which are solid at 4°C and 20°C and liquid at 37°C. The fat content of such compositions ranges from about, 10 to 90 %, 25 to 80 %, or 50 to 70 % (w/v).

Edible spreadable emulsions comprises products known as margarine or halvarine and spreads (typically between 30 and 40 % fat content (w/v). Other commercial food products which fall under this category are spreadable cheeses.

**Margarine** as defined by a directive of the European Union refers to "a water-in-oil emulsion derived from vegetable/animal fats, with a fat content of at least 10% but less than 90%, that remain solid at a temperature of 20°C and are suitable as spread."

In the present invention margarine typically contains only vegetable fats and oils. In the present invention preferred embodiments of margarine typically have a fat content between 50 and 70 %.

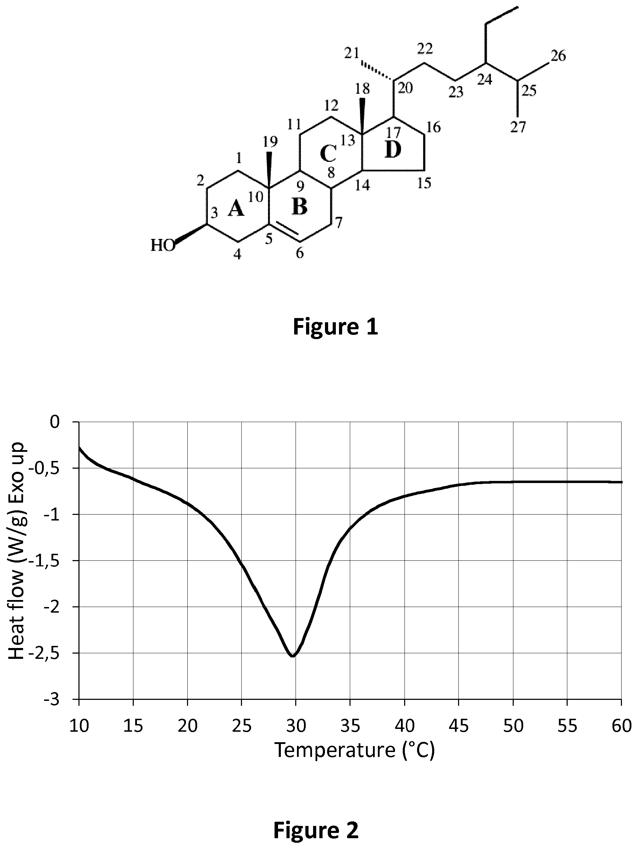

**Phytosterols** are triterpenes with a chemical structure similar to cholesterol. As shown in Figure 1 they consist of a four-ring steroid nucleus with a hydroxyl group attached to the C-3 atom of the A-ring and an aliphatic side chain attached to the C-17 atom of the D-ring. Phytosterols include over 250 different plant sterols and stanols and related compounds, but the more abundant ones are β-sitosterol, stigmasterol and campesterol. Plant sterols only vary in their side chain. Possible side chain variations include the presence of a branched methyl or ethyl group on the C-24 atom and the presence and position of a single double bond (Piironen et al. (2000) J. Sci. Food Agric. 80, 939-966.).

**Phytostanols** are saturated hydrogenation products of phytosterols wherein the double bond in the sterol ring is absent.

**Phytosterol** esters are the reaction product of fats and phytosterols. Depending on the type of fat the fatty acid composition may vary.

For the sake of clarity, esterified version of phytostanols (**phytostanol** esters) do not resort under the definition of phytosterol esters of the present invention.

This is in contrast to e.g. US20110287156 wherein phytosterol ester is a collective name for esters of both plant sterols and plant stanols. However the melting point of a phytosterol ester and its corresponding stanol ester differ significantly, leading to differences in texture and/or mouthfeel.

Suitable phytosterol esters of the present invention further have at least 65, 70, 75, 80 or 85% of unsaturated fatty acids, wherein the unsaturated fatty acid is typically oleic acid (C18:1). Fatty acids with a C16:1, C20:1 or C24:1 chain could be equally used but occur only in limited amounts in a limited number of plant seeds.

Suitable phytosterol esters in the context of the present invention comprise predominantly oleic acid as fatty acid, i.e. at least 65, 70 %, 80 % or 90 %.

A preferred phytosterol ester composition comprises at least 65, 70, 80, 90 % sitosterol oleate.

These contents of oleic acid can be obtained by esterification with olive oil, which has depending from batch to batch an oleic acid content of typically between 74 to 80 %. Also other oils with a high oleic content as high-oleic sunflower oil (about 80%), high-oleic soybean oil (about 82-84%), high-oleic safflower oil (about 78%) and high-oleic canola oil (about 78-84%) are suitable in the context of the present invention.

Other commercial oils have substantially lower oleic acid contents (low-erucic rapeseed oil about 60 %, high-erucic rapeseed oil about 15%; soybean oil about 25 %, corn oil about 27%, cottonseed oil about 41%, sunflower oil about 21%, safflower oil about 18%, butter oil about 30 %, palm oil about 40 %, palm kernel oil about 15%, coconut oil about 8% or less).

**Hardstock** refers to the fraction of fat which is solid at room temperature that is incorporated in products such as margarine next to the liquid oil.

Hardstock is also defined as the fraction of solid fats in the fat fraction of margarines. The fat fraction is the mixture of solid fat and oil.

Fats that are typically used to provide hardstock in such products are natural like palm oil or coconut oil or hydrogenated oils like hydrogenated rapeseed oil or hydrogenated sunflower oil or butter. Fractions of palm oil such as palm stearin and the palm mid fraction are also often used to provide hardstock.

The present invention allows to replace substantial or all of the hardstock that is used in the margarine. Embodiments of the present invention accordingly may comprise less than 4, 3, 2, less than 1,5 or less than 0,5 gram saturated fatty acids per 100 gram of margarine.

"Hardstock" differs from the general term "triglyceride fat" in that the latter may refer to both solid as well as liquid fat and mixtures thereof.

**Liquid oil,** i.e. liquid at 20°C, is a fraction of a spreadable emulsion such as margarine. Typical examples of liquid oils in the context of the present invention are rapeseed oil, sunflower oil or linseed oil.

Fat blends are prepared by first heating the fats separately at a temperature above the melting temperature of the fat to erase the crystal memory until they are fully liquid. Subsequently the liquid oils are combined and stirred while heating at a temperature above the melting temperature of both fats until a visibly homogenous blend is obtained.

While the main constituents of the fat fraction of the present invention are phytosterol ester, liquid oil and hardstock, a composition such as margarine may comprise compounds such as monoglycerides, diglycerides and polyglycerol polyricinoleate (PGPR).

Standard margarine processing is known in the art and comprises the steps of
- Preparation of the oil phase by heating of the hardstock at a temperature above the melting temperature until it is fully melted and blend it with the liquid oil (e.g. rapeseed oil or sunflower oil). Subsequently the emulsifiers are dispersed in the fat phase and possibly also antioxidants and colorants are added to the fat phase.
- Preparation of the aqueous phase by dissolving the salt, proteins, sugar, preservatives, flavourings and possibly also stabilizers in water.
- Preparation of the emulsion by mixing the oil phase and the aqueous phase. Optionally the emulsion is pasteurized to avoid microbial contamination. After pasteurization the emulsion is kept at a temperature of about 43°C to avoid the formation of nuclei.
- Cooling of the emulsion in a scraped surface heat exchanger to induce lipid crystallization.
- The margarine is passed through a pin-worker where the cooled emulsion completes its crystallization and where the desired texture of the margarine is produced.
(Miskandar et al. (2005) Asia Pac J Clin Nutr 14, 387-395 and Young N., Wassell P. (2008) Margarine and Spreads. In: Hasenhuettl G.L., Hartel R.W. (eds) Food Emulsifiers and Their Applications. Springer, New York, NY).

Examples of the above mentioned ingredients are salt (sodium or potassium chloride), lecithin, phosphatides, polyglycerol polyricinoleate (PGPR), milk powder, lactose, citric acid esters of monoglycerides and diglycerides, sodium bicarbonate and citric acid as pH-regulating agents, β-carotene as coloring agent, flavours, preservatives such as calcium disodium EDTA, propyl, octyl and dodecyl gallates, BHT, BHA, ascorbyl palmitate, ascorbyl stearate, stearyl citrate, isopropyl citrate and sorbic acid and benzoic acid and their sodium, potassium and calcium salts, edible proteins such as caseïne, caseinate, albumin, whey proteins, vegetable proteins or soy protein isolate, emulsifiers such as monoglycerides and diglycerides, thickeners such as gelatin, pectin, carrageenans, agar, xanthan, gellan, starch or starch derivatives, alginates, or methylcellulose derivatives (Young N., Wassell P. (2008) Margarines and Spreads. In: Hasenhuettl G.L., Hartel R.W. (eds) Food Emulsifiers and Their Applications. Springer, New York, NY).

The richest natural sources of phytosterols are vegetable oils followed by cereal grains and nuts. Phytosterols are extracted for use in pharmaceutical, cosmetic and food applications (Fernandes & Cabral (2007) Bioresource Technol. 98, 2335-2350; Piironen *et al.* (2000) cited above). The two major raw materials used for large scale phytosterol extraction are vegetable oils and tall oil (a by-product of the kraft pulping process) (Helminen et al. (2006) Organic Process Res. & Dev. 10, 51-63; Thompson & Grundy (2005) Am. J. Cardiol. 96, 3-9). Epidemiologic and experimental investigations have shown that phytosterols may offer protection from the most common cancers in Western societies, but their main beneficial health effect lies in reducing circulating cholesterol concentrations. A meta-analysis of 41 trials showed that a 10% reduction in the blood levels of LDL-cholesterol can be obtained with an optimal intake of phytosterols of 2 g/day, beyond which only a marginal effect is observed (Mensink et al. (2003) The Am. J. of Clinical Nutrition 77, 1146-1155). Furthermore there are indications that each 1% reduction in LDL-cholesterol corresponds to a 1% reduction in coronary heart disease relative risk, especially for subjects at high cardiovascular risk, like those affected by type 2 diabetes (Marangoni & Poli (2010) cited above). The intake of phytosterols to lower LDL-cholesterol exhibits no side effects, except for children and pregnant women who risk a carotenoid deficiency (Nestel et al. (2001) Eur J Clin Nutr. 55, 1084-1090; Sioen et al. (2011) British J. Nutrition 105, 960-966.). Given the fact that the average daily intake of phytosterols in adults only reaches between 150 and 400 mg/day, phytosterols have to be administered in a higher concentration in order to benefit from their health-promoting properties (Ntanios (2001) Eur. J. Clin. Nutrition 103, 102-106.). One possible administration method is incorporation of phytosterols into a food matrix. Enrichment of food products with free phytosterols is, however, difficult from a technological and food quality point of view since they are insoluble in water and poorly soluble in dietary fats while their melting points are rather high (about 140-150°C) (Piironen *et al.* (2000) cited above). Consequently, much research was performed to find approaches to overcome these limitations. Esterification of phytosterols at the C-3 position of the A-ring with a fatty acid (FA) to obtain phytosterol esters (PEs) increases their lipid solubility, lowers their melting point and thus facilitates their incorporation into fat containing foods (Ostlund (2007) Ann. Rev. Nutrition 22, 533-549.). Physoterol esters are currently already being used as a food ingredient in modern functional food formulations. Margarines and table spreads are ideal vehicles, although cream cheese, salad dressings, and yogurts are also used as delivery systems (Vaikousi et al. (2007) J. Agric. Food Chem. 55, 1790-1798.). From an analysis of fat rich cholesterol lowering food products like margarines and spreads on the Belgian market it was deduced that the phytosterol ester concentration that is applied in the fat phase in these products is in the range of 10 to 50% depending on the product type (e.g. light margarine, margarine with butter or olive oil, etc.).

However, addition of phytosterol esters to the fat phase of food products may influence its crystallization behavior and may thus lead to problems occurring during the production process or with the macroscopic properties of the end product (Rodrigues et al. (2007) Food Res. Int. 40, 748-755,). Fundamental research on this topic is, however, very much lacking. To our knowledge, the influence of the addition of phytosterol esters on the physical properties of edible fats has only been reported twice in the literature. Vu et al. (2004) Food Res. Int. 37, 175-180 showed that self-made phytosterol esters added to liquid corn oil caused unwanted phytosterol ester crystallization above a certain threshold concentration. Rodrigues *et al.* (2007) cited above investigated how the crystallization behaviour of milk fat was changed by blending with a commercial mixture of phytosterol esters. They showed that adding phytosterol esters to milk fat induced a softer consistency and a lower solid fat content. These authors however, did not report any information on the melting and polymorphic behaviour of the pure substrates nor their blends since no differential scanning calorimetry (DSC) or X-ray diffraction (XRD) analyses were performed. Furthermore, phytosterol esters were only added in two different concentrations giving only a limited insight into the phase behaviour of phytosterol ester blends with milk fat.

### Examples

### Example 1. Influence of the addition of β-sitosteryl oleate on the crystallization behavior of palm oil in the 'equilibrium state' Material

β-sitosterol (≥ 70%) and oleic acid (≥ 90%) were purchased from Sigma Aldrich (Brondby, Denmark). Palm oil was obtained from Unilever (the Netherlands). β-sitosterol had a purity of 80.5% and was used without further purification. The impurities were campesterol and beta-sitostanol, each with a maximum concentration of 10%.

### Synthesis and purification of β-sitosteryl oleate

The synthesis of the β-sitosteryl oleate was based on the method of Panpipat et al. (2013b) Biochem. Engin. J. 70, 55-62. β-sitosterol was mixed with oleic acid at a mole ratio of 1.0:1.0 (mol/mol) at a concentration of 0.2M in 800 mL hexane. Immobilized lipase Candida Antarctica lipase A (CAL A, Codexis, Pasadena, USA) was added to the blend in the amount of 20% (wt% of β-sitosterol). The reaction was conducted in a 1 L closed reactor with mechanic stirrer at 50°C for 48h under continuous stirring and in the presence of 62.5% (wt% of β-sitosterol) molecular sieve to remove the water from the solvent. The reaction was terminated by filtering out the immobilized lipase and the molecular sieve under vacuum pressure (Sigma-Aldrich, Brondby, Denmark). The residue was washed with hexane to remove any substrate or product.

A first, rough estimation of the yield of the esterification reaction was made by thin layer chromatography (TLC). Therefore 10 µl of the resulting reaction mixtures, were applied to TLC together with 10 µl of β-sitosterol and oleic acid as a reference. The plates were developed with two different developing solvents: first with chloroform/methanol/water (64: 10: 1, v:v:v) up to half of the plate and dried and subsequently with chloroform/methanol/acetic acid (97.5:2.5:1, v:v:v) to nearly the top of the plate and dried again. The identification of the spots on the plate was done by immersing the plate shortly in a sulfuric acid solution (30% H2SO4 in methanol) and subsequently heating the plate at 100°C for 1 min with a blow dryer. The spots of β-sitosterol and of the β-sitosteryl oleate show a purple color, while those of oleic acid are white. The retention factor (Rf) values of β-sitosterol, oleic acid and β-sitosteryl oleate were 0.63, 0.47 and 0.91 respectively. The reaction yield was estimated based on the relative intensity of the β-sitosterol spot to the β-sitosteryl oleate spot resulting from the reaction mixture. The yield was clearly lower than 90% and was estimated between 40% and 60%.

The synthesized β-sitosteryl oleate was purified using a low-pressure silica column. A glass column (4 cm x 40 cm) packed with 300 ml silica gel (Sigma-Aldrich, Overrijse, Belgium) dispersed in hexane was used to remove β-sitosterol and oleic acid from the β-sitosteryl oleate. First 10g of reaction product was coated on silica gel by mixing the reaction product with eight spoons of silica gel in hexane at 60°C for 5 min after which the solvent was removed. The silica coated reaction product was grinded to powder and then loaded on the column. Then 1,8 L solvent hexane/ethyl acetate (40:1, v:v) was allowed to flow through the column and the eluant was collected in tubes of 30 ml. As tested with TLC the Rf values of β-sitosterol, oleic acid and β-sitosteryl oleate in this solvent were 0.00, 0.00 and 0.35 respectively. Each tube was tested for the presence of β-sitosterol, oleic acid and β-sitosteryl oleate using TLC by applying 10 µl of each test tube to a TLC plate. The plates were developed with chloroform/methanol/water (64: 10: 1, v:v:v) up to half of the plate and subsequently with chloroform/methanol/acetic acid (97.5:2.5:1, v:v:v) to nearly the top of the plate and dried again. The presence of β-sitosterol, oleic acid and β-sitosteryl oleate on the plate was visualized using a sulfuric acid solution as described above. The tubes containing only β-sitosteryl oleate were collected and the solvent was evaporated.

### Fatty acid composition of palm oil and β-sitosteryl oleate

The fatty acid composition was determined by methylation of palm oil and oleic acid. In this way 'fatty acid methyl esters' (FAMEs) were formed, which were then separated via gas chromatography with flame ionisation detection (GC-FID). Methylation was performed by heating a blend of 5 mg of the lipid, 1 ml toluene and 2 ml of 1% sulphuric acid overnight to 50°C. 5 ml of 5% sodium chloride solution with water as solvent was then added and the FAMEs were extracted with 3 ml of hexane. The separation and quantification of the FAMEs were obtained with GC-FID (Trace GC Ultra, Thermo Fisher Scientific, Interscience, Belgium) with cold on-column injection. The FAMEs were separated on an EC Wax column (length: 30 m, inside diameter: 0.32 mm, film: 0.25 µm) (Grace, Belgium) using a specific temperature time program (70°C - 180°C (5°C/min), 180°C - 235°C (2°C/min), 235°C (9.5 min). The peak identification was done by using a standard series of 35 different FAMEs (Nucheck, USA). Quantification of the peak area was done with Chromcard for Windows software (Interscience, Belgium). The determination was carried out in triplicate (Ryckebosch et al. (2012) JAOCS 89, 189-198).

**Table 1. Fatty acid composition (%) of β-sitosteryl oleate and palm oil**

| **Fatty acid** | **Palm oil** | **β-sitosteryl oleate** |
|---|---|---|
| C14:0 | 1.0 | - |
| C16:0 | 45.4 | 3.0 |
| C18:0 | 4.3 | 4.0 |
| C18:1 | 39.6 | 91.2 |
| C18:2 | 9.8 | - |
| C24:1 | - | 1.7 |

| | | |
|---|---|---|
| The values show the average of three measurements. The error is 0.2%. | | |

### Preparation of the blends

Nine blends of β-sitosteryl oleate with palm oil were prepared with a β-sitosteryl oleate concentration range of 10 to 90% with composition intervals of 10%. The pure lipids were completely melted in an oven at a temperature of 80°C. The melted pure lipids were assembled in a conic tube and held at 80°C for 30 min while regularly mixing with a vortex.

### Crystallisation to 'equilibrium' state

In this example the effect of the addition of β-sitosteryl oleate on palm oil crystallization in the 'equilibrium' state is shown. First the samples were melted at 80°C during 15 min and thereafter put in a water bath at 10°C for rapid cooling (at about 5°C/min). In accordance with the existing literature (AOCS, 1997a) a time-temperature profile of 72h at 10°C was used to bring the samples in the 'equilibrium' state. It was observed that the DSC melting enthalpy and the peak maximum of the melting curve of palm oil did no longer change significantly when holding at 10°C for longer than 48h. The described tempering of the samples was performed in a water bath.

### Differential scanning calorimetry (DSC)

The DSC experiments were performed with a DSC Q2000 (TA Instruments, New Castle, USA) equipped with an autosampler and nitrogen as a purge gas. Sapphire and indium were used for the baseline calibration and an empty pan was used as a reference. Hermetic aluminium pans (TA Instruments, Brussels, Belgium) were filled with about 10 mg of melted fat. About 10-20 mg of the melted samples was sealed into Tzero hermetic aluminium pans (TA Instruments, Brussels, Belgium). After reaching the 'equilibrium' state, the samples were heated at 20°C/min to 80°C The melting enthalpy (ΔH), i.e. the amount of heat released during melting, was calculated with the program Universal Analysis by integration of the melting curve using a horizontal baseline. The melting curves of the blends of palm oil with β-sitosteryl oleate showed one peak that was integrate linearly with a fixed end point at 70°C. The peak maxima of the peaks in the melting curves (Tₘₐₓ) was also determined using Universal Analysis.

### X-ray diffraction

XRD analyses were performed on the blends of palm oil with 0, 20, 40, 60, 80 and 100% β-sitosteryl oleate after they reached the 'equilibrium state'. A Xenocs Xeuss X-ray camera (Xenocs, Sassenage, France) equipped with a Mar345 image plate detector (MARresearch, Norder-stedt, Germany) was used for taking X-ray scattering patterns. The GeniX 3D Molybdenum ultra-low divergence X-ray beam source had a power of 50 kV (1 mA) giving a constant intensity beam of 0.7107 Å. About 25-30 mg of melted sample was sealed into Tzero hermetic aluminium pans (TA Instruments, Brussels, Belgium). After reaching the 'equilibrium' state the samples were placed on a temperature-controlled Linkam DSC600 stage (Linkam Scientific Instruments, Surrey, UK) in front of the beam. Combined small-angle X-ray scattering (SAXS) and wide-angle X-ray diffraction (WAXD) patterns were recorded at a constant temperature of 10°C. All X-ray patterns were processed with Conex software also using an empty DSC pan measurement and a calibration measurement with a silver behenate sample (Gommes & Goderis (2010) J. Appl. Crystall. 43, 352-355.).

### Polarized light microscopy (PLM)

For PLM, a drop of melted, homogenous sample of each blend and of both pure components was transferred to a microscope glass plate by means of a glass Pasteur pipette. This droplet was covered with a cover slide. The samples were then placed in the oven to melt the sample again in order to obtain an even and uniform layer thickness of the sample.

The microstructure of the samples was studied with a polarized light microscope Olympus BX51 (Olympus Optical Co. Ltd., Japan) equipped with a digital camera Infinity 2 (Lumenera corporation, Canada). After reaching the' equilibrium state' the samples were placed on a temperature-controlled Linkam PE120 sheet (Linkam Scientific Instruments, UK). Pictures were taken at a magnification of 40x and 100x using the Infinity capture software (Lumenera Corporation, Canada).

### Results

### Pure β-sitosteryl oleate

### Differential scanning calorimetry

The melting curve of β-sitosteryl oleate is shown in Figure 2. One single peak was observed in this melting curve. The sterolic part of the β-sitosteryl oleate consisted of different types of phytosterols. The DSC measurements of the pure β-sitosteryl oleate showed that these mixtures of different sterols which were esterified with one fatty acid behaved practically as a pure component by their good miscibility. The observed effects could thus be fully attributed to the type of fatty acid in the phytosterol ester and not in the variation between the different phytosterols. The peak maximum of the melting curve was 29.9°C ± 0.9°C which was not significantly different from the peak maximum of PO. This value corresponds to the melting point shown in the literature (Leeson & Flöter (2002) Food Res. Int. 35, 983-991). The melting enthalpy was 53.9 J/g ± 2.1 which was not significantly different from the melting enthalpy of PO. This value is also close to the melting enthalpy shown in the above cited literature (Leeson & Flöter (2002)). Since there is only one single peak, polymorphic transitions did not occur during heating and β-sitosteryl oleate was crystallised in one fraction (Panpipat et al. (2013a) J. Coll. Interface Sci. 407, 177-186.).

### X-ray diffraction

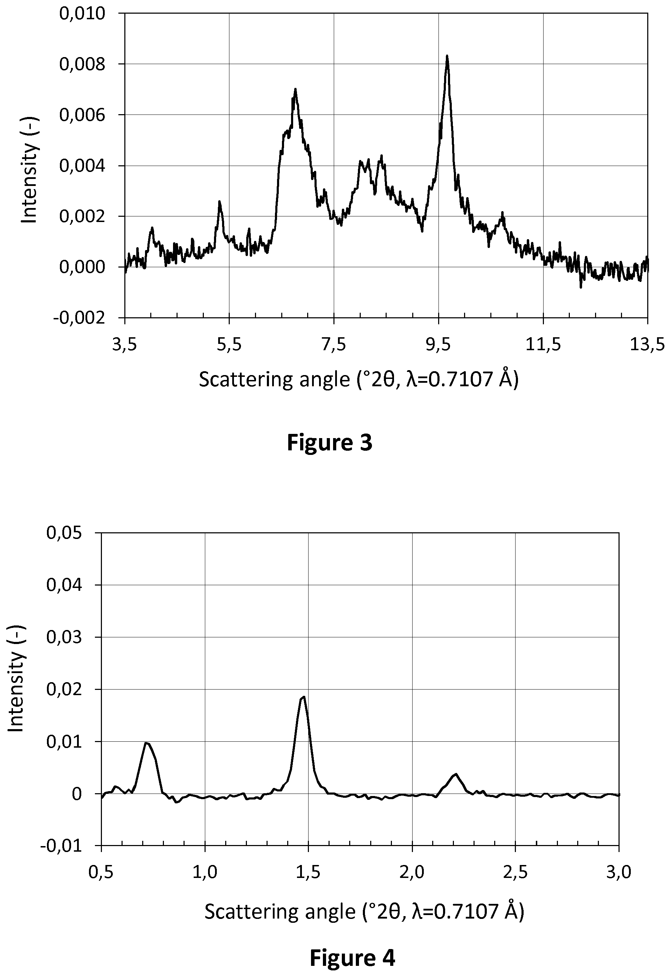

In Figure 3 seven peaks were observed in the WAXD pattern of P-oleate: two small peaks at 2θ = 4.04° (d = 10.08 Å) and 2θ = 5.33° (d = 7.65 Å), a strong peak at 2θ = 6.76° (d = 6.03 Å), a broad double peak at 2θ = 8.15° (d = 5.00 Å) and 2θ = 8.41° (d = 4.85 Å), another strong peak at 2θ = 9.68° (d = 4.21 Å) and a last, small peak at 2θ = 10.72° (d = 3.80 Å). Figure 4 shows the SAXS pattern. Three peaks were visible, starting at a medium peak at position 2θ = 0,73° (d = 55,80Å), followed by a sharp peak at position 2θ = 1,48° (d = 27,52Å) and a small peak at 2θ = 2,20° (d = 18,54Å). Since there were several peaks in both the SAXS and WAXD patterns, β-sitosteryl oleate is clearly present in crystalline phase (Dijkstra et al. (2007), In "The Lipid Handbook". Third Edition. Taylor & Francis Group, Boca Raton). For the explanation of these peaks, the same terminology as with TAG lipids for example palm oil cannot be used. Phytosterol esters' molecular structure is too different from the TAG's molecular structure to speak of the same crystalline forms. In the past, XRD data from phytosterol esters were not yet investigated. Since cholesteryl esters (CE) and phytosterol esters have a similar molecular structure this work compares the XRD data of β-sitosteryl oleate with those of CE. The extra ethyl group that occurs in beta-sitosteryl esters compared to CE, jumps out of the plane. Ginsburg et al. (1984) [Prog. Lipid Res. 23, 135-167], shows the XRD pattern of cholesteryl oleate (CE oleate) in crystalline phase, liquid phase and mesomorphic phase. The XRD pattern of the crystalline phase of CE oleate largely corresponds to the XRD pattern of pure PE oleate. In CE oleate there are peaks present in the SAXS pattern due to the layered structure of CE oleate. β-sitosteryl oleate was therefore probably also found in a layered structure (Souza et al. (2011) Chem. Physics Lipids 164, 664-671.).

For CE with a fatty acid chain of at least six carbon atoms, three crystalline forms have already been described:'Monolayer Type 1','Monolayer Type 2' and 'Bilayer'. The relative importance of the intermolecular chain- chain interactions, ring-ring interactions and chain-ring interactions is a factor that determines which type of crystalline form is formed. These interactions determine the relative stability of the crystalline forms at a certain temperature. All three crystalline forms belong to the monoclinic crystal structure (Ginsburg *et al.* (1984) cited above). The crystalline form of CE oleate is Monolayer Type 2, characterized by d = 18,5Å as layer thickness between the monolayers. These crystals are monoclinic with two molecules per unit cell (Ginsburg *et al.* (1984) cited above; Guo & Hamilton (1995) Biophysical Journal 68, 2376-2386); Souza *et al.* (2011) cited above; Das & De (2011) Chem. Phys. Lipids 164, 33-41). This value (d = 18,5Å) was also reflected in the SAXS pattern of β-sitosteryl oleate, but with a much lower intensity than the peak at position 2θ = 1,48° (d = 27,52Å). This layer thickness (d = 27,52Å) is rather typical for Monolayer type 1. The third peak with distance d = 55.80Å is then again typical as layer thickness for a double-layer structure (Dorset (1987) J. Lipid Res. 28, 993-1005; Das & De (2011) cited above). The relative intensities of the peaks depend on the orientation of the molecular long axis relative to the monolayer plane. Reduced intensity for certain peaks is due to the effect of the preferred orientation of the crystallites (Das & De (2011) cited above). In addition, Dorset (1987) cited above, also quotes a few distances, corresponding to the double-layer structure of CE-myristate, which were also found in the WAXD of β-sitosteryl oleate. The peak with distance d = 4,85Å might be due to side-by-side stacking of the fatty acid chains and the distance d = 10,08Å might indicate the side-to-side stacking of the rings (Dorset (1987) cited above). The dominant interactions in Monolayer Type 2 CE crystals are ring-ring and chain-chain (Ginsburg *et al.* (1984) cited above). The molecules are anti-paralleled. The acyl chains of opposite monolayers are interlocked, but loosely packed next to each other to form the interface between the layers. They do not constitute a specific 'subcell' structure (Gao & Craven (1986) J. Lipid Res. 27, 1214-1221; Das & De (2011) cited above). At CE oleate, the unsaturated chain is bent in such a way that the linearity of the chain is preserved as good as possible (Craven & Guerina (1979) Chem. Phys. Lipids 29, 91-98; Ginsburg *et al.* (1984) cited above). An extensive conformity of the oleate chain is observed, outside a kink region of six atoms around the cis-double bond (Gao & Craven (1986) cited above). It was concluded that β-sitosteryl oleate formed the bilayer structure in the 'equilibrium' state.

### Polarized light microscopy

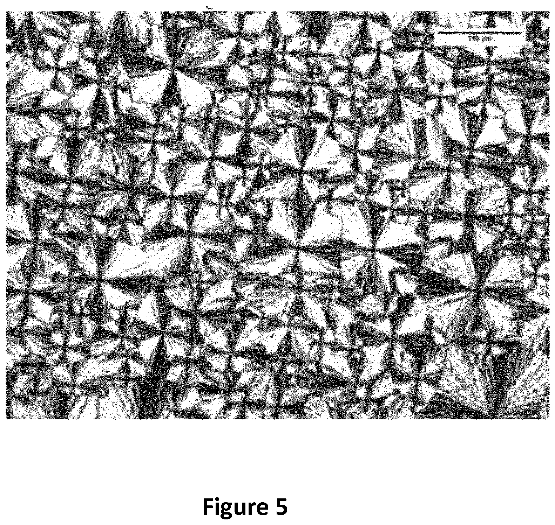

Figure 5 shows the crystal network of β-sitosteryl oleate after 72h tempering at 10°C. Crystals were clearly observed, which was also expected by the XRD results. The crystals were needle-shaped, as this is also the case with CE oleate (Das & De (2011) cited above). The needles have structured themselves as spherulites. The spherulites contain a polarization cross with arms parallel to the polarization planes. These were also observed at CE (Lundberg (1975) Chem. Phys. Lipids 14, 309-312). The diameter of the spherulites ranged from 30 to 230 µm. The β-sitosteryl oleate spherulites were predominantly greyscale colored but also faintly showed some yellow, orange and blue colors.

### Blends of palm oil with β-sitosteryl oleate

### Differential scanning calorimetry

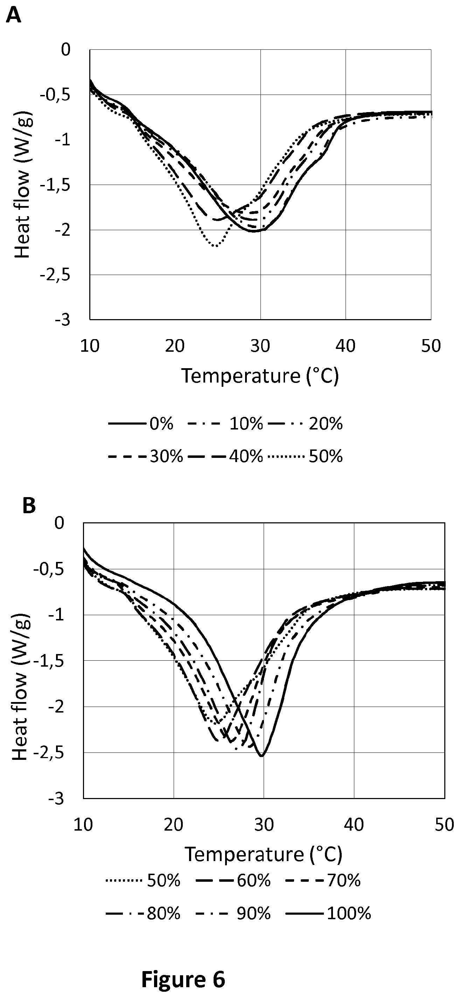

The melting curves of the blends of palm oil with β-sitosteryl oleate are shown in Figure 6A and 6B. One peak per concentration was observed each time. From pure palm oil to palm oil with 30% β-sitosteryl oleate, the peak was reduced and the peak maximum shifted to lower temperatures. From palm oil with 30% β-sitosteryl oleate to palm oil with 40% β-sitosteryl oleate, the peak seemed to maintain the same size, but shifted significantly to a lower temperature. From the 40% to 60% β-sitosteryl oleate blend, the peak was mainly sharper and larger at about the same temperature. From palm oil with 60% to 70% β-sitosteryl oleate, the peak began to shift back to a higher temperature without any change in peak size. From the 70% to 80% β-sitosteryl oleate blend, the peak became sharper and bigger and shifted to a higher temperature. From palm oil with 80% to 90% β-sitosteryl oleate, the peak shifted to a higher temperature without any apparent change in peak size. From palm oil with 90% to 100% β-sitosteryl oleate, the peak became sharper and larger and the peak maximum increased.

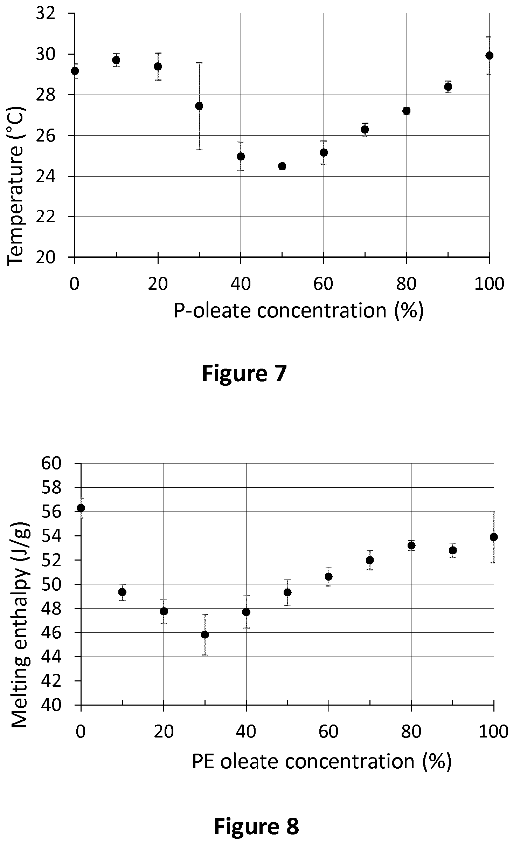

Figure 7 shows the peak maxima of the blends of palm oil with β-sitosteryl oleate at 'equilibrium'. The peak maximum, corresponding to each concentration of β-sitosteryl oleate, is the mean of the peak maxima of five samples. Up to an addition of 20% β-sitosteryl oleate, the peak maximum did not decrease significantly. With the addition of more than 20% β-sitosteryl oleate, the peak maximum dropped to a minimum of 24.5°C ± 0.1°C at a concentration of 50%. When the concentration of β-sitosteryl oleate was subsequently increased, the peak maximum rose gradually again. As mentioned before, no significant difference was observed between pure palm oil and 100% β-sitosteryl oleate, moreover, these peak limits did not differ significantly from palm oil with 10%, 20% and 90% β-sitosteryl oleate.

Figure 7 can also be seen as the liquidus line in the phase diagram of the binary palm oil/β-sitosteryl oleate system (Marangoni & Wesdorp (2013) Pharmacol. Res. 61, 193-199). The phase diagram showed eutectic behaviour, since at some β-sitosteryl oleate concentrations the peak maximum is lower than that of pure palm oil and pure β-sitosteryl oleate. The eutectic minimum was reached at a concentration of 50% β-sitosteryl oleate. The eutectic behaviour of blends is due to incompatibility in the solid phase (Dijkstra *et al.* (2007) cited above). The reason why β-sitosteryl oleate and palm oil are immiscible in the solid phase is due to the difference in molecular structure, which means that they do not fit into a single crystal form (Dorset (1987) cited above; Lida et al. (2002) JAOCS 11, 1137-1144; Saadi et al. (2011) Journal of Food Sci. 76, C21-C30).

When the melting enthalpy was plotted as function of the β-sitosteryl oleate concentration (Figure 8) a decrease to 30% β-sitosteryl oleate was observed. The decrease in melting enthalpy reached a minimum value of 45.8 J/g ± 1.7 at a concentration of 30% β-sitosteryl oleate and then gradually increased again. From 70% β-sitosteryl oleate a plateau value was reached, which was not significantly different from the melting enthalpy of 100% β-sitosteryl oleate.

### X-ray diffraction

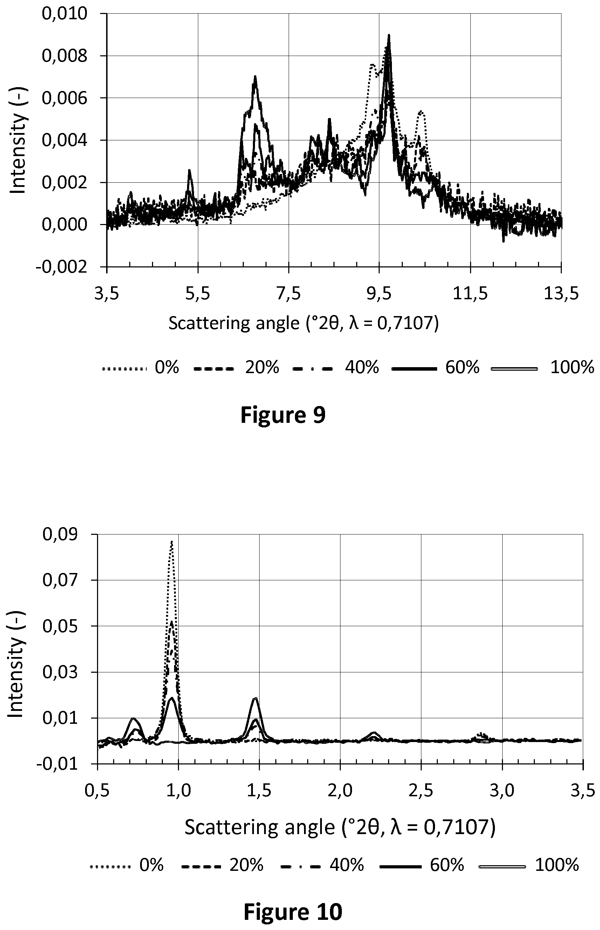

Figure 9 and 10 show the WAXD and SAXS patterns of the blends of palm oil with β-sitosteryl oleate after 72h tempering at 10°C. In SAXS, the first peak characteristic for β-sitosteryl oleate became visible from 20% of β-sitosteryl oleate onwards. In WAXD, the 20% β-sitosteryl oleate curve also tended to the β-sitosteryl oleate peak with position 2θ = 6.76° (d = 6.03Å). β-sitosteryl oleate crystallized therefore already from 20%, which was also expected by DSC. The SAXS and WAXD patterns of the 40% and 60% β-sitosteryl oleate blends showed clearly the peaks of both β-sitosteryl oleate and palm oil. Palm oil continues to form crystals at high concentrations of β-sitosteryl oleate. There were no new peaks apart from typical palm oil and β-sitosteryl oleate peaks. β-sitosteryl oleate and palm oil crystallised separately from each other and not in a single crystal form.

Palm oil crystallized at all concentrations of β-sitosteryl oleate in the beta prime polymorph. The crystalline form of β-sitosteryl oleate was also the same in all blends.

The area of all diffraction peaks corresponding to one crystal form shall be proportional to the amount of this form, but the proportionality factor may vary depending on the crystalline structure. This means that the proportions of the different crystalline forms cannot be derived directly from the relative surfaces below their corresponding peaks (Shukat et al. (2012) J. Thermal Anal. Calorimetry, 108, 153-161). It was visually observed that the relative area of palm oil peaks decreased and the relative area of β-sitosteryl oleate peaks increased with increasing concentration of β-sitosteryl oleate.

What can be is that the amount of beta prime polymorphic from of palm oil decreases and the amount of β-sitosteryl oleate crystals increases with increasing concentrations of β-sitosteryl oleate.

### Polarized light microscopy

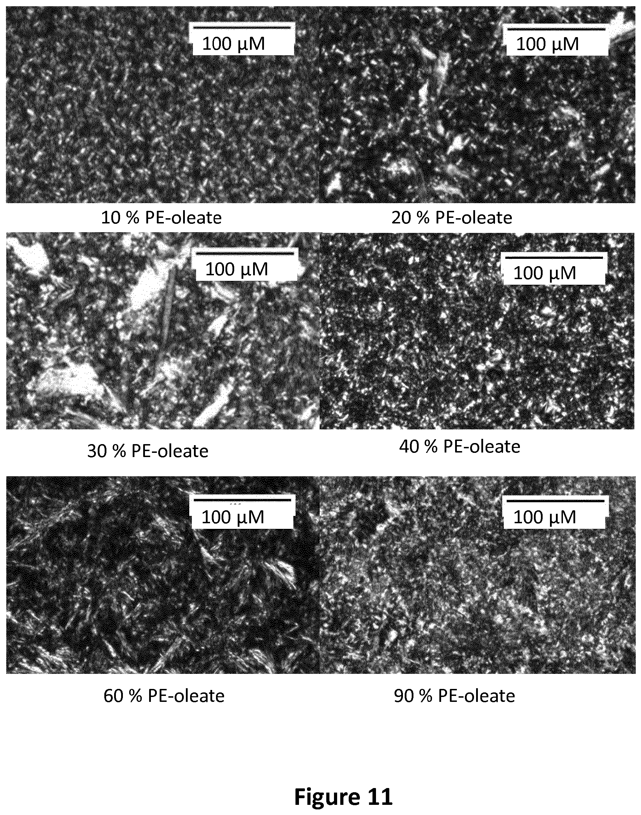

Figure 11 shows the microscopy photos associated with different concentrations of β-sitosteryl oleate. As was already clear from the XRD results, palm oil and β-sitosteryl oleate crystallised separately and formed their own crystals. In the blend with 10% β-sitosteryl oleate no β-sitosteryl oleate crystals were observed, while in the blend with 20% β-sitosteryl oleate bright, needle-shaped β-sitosteryl oleate crystals with a size of about 16 to 42 µm were observed next to the palm oil crystals. The largest β-sitosteryl oleate needle-shaped crystals were observed in the blend with 30% β-sitosteryl oleate and had a size of about 23 to 150 µm. From this concentration the β-sitosteryl oleate crystals were grouped together although they did not form spherulites. In the blends with 40 to 90% β-sitosteryl oleate the needle-shaped crystals of β-sitosteryl oleate were smaller with a size of about 7 to 25 µm, which is not much larger than the palm oil crystals. From 80% β-sitosteryl oleate the palm oil crystals could not be clearly distinguished in the images anymore. The needle-shaped β-sitosteryl oleate crystals were very bright and showed some orange and green colors.

The crystals of β-sitosteryl oleate appeared to be structuring themselves more and more into spherulites at higher concentrations of β-sitosteryl oleate. The growth of the spherulites is in function of the degree of supersaturation, just like nucleation and growth processes (Marangoni & Wesdorp (2013) cited above). Only 100% β-sitosteryl oleate was clearly found to be spherical. Up to and including 90% β-sitosteryl oleate the driving force for spherulitic growth and arrangement was likely too small. Sferulitic growth is caused by diffusional instabilities, but also by three nucleation modes of new crystallites on the growth front. Sferulitic growth is a secondary nucleation process (Abe et al. (2002) Liquid Crystals 29, 1503-1508; Marangoni & Wesdorp (2013) cited above).

### Example 2

Table 2 shows the composition of a number of commercial margarine products. Analysis of the product and product pack information reveals that all products with vegetable fats contain 19-31 g saturated fats per 100 g/ fat and the cholesterol-lowering margarines contain phytosterol/phytostanol esters ranging from 15 to 41 g per 100 g fat.

**Table 2. Composition of commercial margarine products**

| Margarine | fat content (g/100g product) | Saturated fats (g/100 g fat) | phytosterolesters/phyto stanol ester (g/100g fat) | Type of hardstock | Liquid oil | Saturated fats (g/100g product) | Phytosterol/ phytostanol esters (g/100g product) |
|---|---|---|---|---|---|---|---|
| Embodiment of margarine of the invention | 60 | 5.2 | 30 | none | Rapeseed oil | 3.1 | 18 |
| Embodiment of 'light' margarine of the invention | 30 | 4.3 | 45 | none | Rapeseed oil | 1.3 | 14 |
| "Benecol ^{™} smeren en bakken" ## | 60 | 20 | 15 ## | Palm oil | Rapeseed oil | 12 | 9 ## |
| Benecol^{™} light ## | 35 | 19 | 25.7 ## | Palm oil+ coconut oil | Rapeseed oil | 7 | 9 ## |
| "Benecol^{™} met boter" ## | 59 | 29 | 25 ## | butter | Rapeseed oil | 17 | 15 ## |
| Becel Pro Activ^{™} original | 42.5 | 22 | 29 | palm oil | Sunflower, linseed, Rapeseed oil | 9 | 12 |
| Becel Pro Activ^{™} light | 30.5 | 22 | 41 | palm oil | Sunflower, linseed, Rapeseed oil | 7 | 13 |
| Becel Pro Activ ^{™} with olive oil | 42.5 | 23 | 29 | Palm oil | Sunflower, linseed, Rapeseed oil | 10 | 12 |
| Becel original^{™} | 45 | 20 | 0 | palm oil | Sunflower, linseed, Rapeseed oil | 9 | 0 |
| Becel gold | 70 | 23 | 0 | palm oil | Sunflower, linseed, Rapeseed oil | 16 | 0 |
| Becel Bio (on bread) | 70 | 25 | 0 | Palm oil | Sunflower, rapeseed oil | 18 | 0 |
| Becel with avocado and lime oil | 70 | 26 | 0 | Palm oil | Sunflower, rapeseed, linseed oil | 18 | 0 |
| Everyday smeren | 59 | 29 | 0 | Palm oil | Sunflower, Rapeseed oil | 17 | 0 |
| Planta classic | 59 | 31 | 0 | Palm oil | Rapeseed oil | 18 | 0 |
| Bue Band Halvarine | 39 | 31 | 0 | Palm, coconut oil | Sunflower, linseed, rapeseed oil | 12 | 0 |
| Clover original on bread | 65 | 34 | 0 | Palm oil | Rapeseed oil | 22 | 0 |
| Alpro Soya on bread | 38 | 25 | 0 | Palm, coconut oil | Soybean oil | 10 | 0 |
| Vitelma essentials | 38 | 19 | 0 | Palm oil | Linseed, Rapse-seed oil | 7.1 | 0 |
| Phytobake specialty shortening | Does not apply | 36 | unknown | Palm oil, hydrog enated soy oil | None | 36 | unknown |
| WO9819556 Example 6: 60% margarine + stanol esters | 60 | 5.2 | 35 | None | rapeseed | 3.1 | 21 |
| WO9819556 Example 7: 40% fat spread + stanol esters | 40 | 9 | 33.3 | Palm stearin + coconut oil (7%) | - | 3.6 | 13 |
| WO9819556 Example 8: Spreadable cheese + stanol esters | 25.4 | 10 | 33.3 | Palm stearin + coconut oil (7%) | - | 2.6 | 8.5 |
| WO9819556 Example 9: 50% fat spread + stanol esters | 50 | 12 | 30 | Palm stearin + coconut oil (11.5% ) | - | 6 | 15 |
| WO9819556 Example 10: High fiber spread | 40 | 5 | 38 | None | rapeseed oil | 2 | 15 |

| | | | | | | | |
|---|---|---|---|---|---|---|---|
| Products containing phytostanols are indicated with ##. | | | | | | | |

### Example 3 preparation of blends of β-sitosteryl oleate with rapeseed oil

β-sitosteryl oleate was prepared according to the method described in Example 1. Blends were made from the self-made β-sitosteryl oleate (PE oleate) with rapeseed oil. The PE oleate concentrations of the blends were 30,40 and 50%. The purity of PE oleate was >99% (as determined by thin layer chromatography). To compare the SFC profile of these blends with that of the fat fraction of existing margarines, 3 types of commercial margarines were used: Benecol^{™} "bakken en smeren", Becel Original^{™} and Becel Pro Activ^{™}. (the composition of these margarines are summarised in table 2).

The PE oleate fatty acid composition was determined according to method by Ryckebosch et al (2012) cited above.

The sterol composition of PE oleate was analysed according to method of Ryckebosch, (2012) cited above

A representative sample of the margarine was melted in an oven at 80°C. The liquid margarine was then dissolved in an excess diethyl ether. Water was removed by adding anhydrous Na₂SO₄ and 30 mins to rest under regular stirring. The Na₂SO4 was removed by filtration over a folding filter. The residue was washed repeatedly with diethyl ether until the yellow colour disappeared to definitely have all lipids in the filtrate. The diethyl ether in the filtrate was evaporated with a rotavapor. The yield of the fat extraction was compared with the fat content stated on the packaging of the margarine. The fatty acid composition of the fat fractions of the margarine was also determined using the method above described and compared with the value on the packaging.

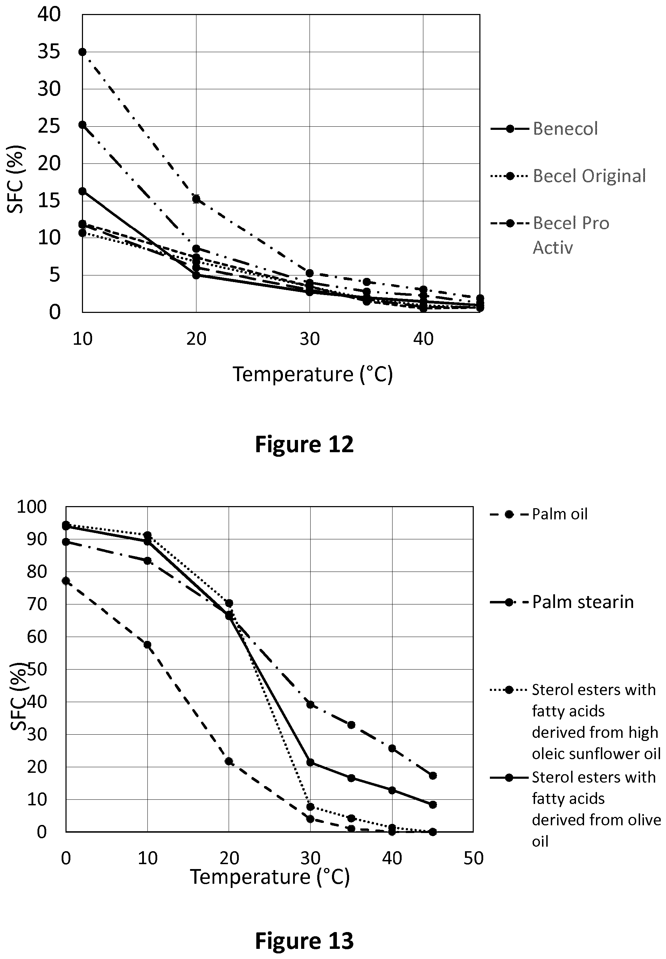

Solid fat content (SFC) was determined from the following fats: blends of 30, 40, 50% PE oleate in rapeseed oil and fat fractions Becel Original ^{™}, Becel Pro Activ ^{™} and Benecol ^{™} according to AOCS method Cd16b-93 (direct method) for non-stabilizing fats. Fats were melted for 30 mins at 80°C, then kept overnight (16h) at 0°C and then for 60-65 mins at each of the selected measuring temperatures: 10,20,30,35,40 and 45°C. The SFC determination was made for all fats in 3-fold. Results are shown in table 3 and figure 12.

**Table 3. Fatty acid content of PE oleate**

| **Fatty acid** | **content (%)** | | |
|---|---|---|---|
| C16:0 | 2.73 | ± | 0.24 |
| C18:0 | 4.00 | ± | 0.19 |
| C18:1 | 93.27 | ± | 0.04 |
| Saturated fatty acids | 6.73 | ± | 0.04 |

| | | | |
|---|---|---|---|
| The values show the average of three measurements. The error is 0.2%. | | | |

**Table 4. Sterol composition of PE oleate**

| **Sterol** | **Content (%)** |
|---|---|
| β-sitosterol | 80.9 |
| β-sitostanol | 12.9 |
| campesterol | 6.2 |

| | |
|---|---|
| The values show the average of three measurements. The error is 0.2%. | |

**Table 5 Solid Fat Content (SFC) values for different compositions of PE-oleate in rapeseed oil and for different commercial margarines (mean ± standard deviation of three replicates)**

| **sample** | **0°C** | **10°C** | **20°C** |
|---|---|---|---|
| Benecol ^{™} | 17.4 ± 0.4 | 11.8 ± 0.5 | 6.0 ± 0.2 |
| Becel Original ^{™} | 13.3 ± 0.1 | 10.7 ± 0.5 | 6.8 ± 0.3 |
| Becel Pro Activ ^{™} | 14.5 ± 0.3 | 12.0 ± 0.2 | 7.4 ± 0.2 |
| 30% PE-oleate | 22.7 ± 0.1 | 16.3 ± 0.2 | 5.0 ± 0.2 |
| 40% PE-oleate | 31.9 ± 0.1 | 25.2 ± 0.3 | 8.6 ± 0.2 |
| 50% PE-oleate | 41.4 ± 0.1 | 35.0 ± 0.1 | 15.3 ± 0.6 |

| **sample** | **30°C** | **35°C** |
|---|---|---|
| Benecol^{™} | 3.0 ± 0.2 | 1.7 ± 0.1 |
| Becel Original ^{™} | 3.5 ± 0.3 | 1.8 ± 0.5 |
| Becel Pro Activ ^{™} | 3.5 ± 0.4 | 1.5 ± 0.1 |
| 30% PE-oleate | 2.7 ± 0.1 | 2.0 ± 0.0 |
| 40% PE-oleate | 4.0 ± 0.1 | 2.8 ± 0.2 |
| 50% PE-oleate | 5.3 ± 0.1 | 4.1 ± 0.0 |

| **Sample** | **40°C** | **45°C** |
|---|---|---|
| Benecol^{™} | 0.7 ± 0.3 | 0.7 ± 0.1 |
| Becel Original^{™} | 0.9 ± 0.1 | 0.7 ± 0.1 |
| Becel Pro Activ^{™} | 0.5 ± 0.1 | 0.7 ± 0.3 |
| 30% PE-oleate | 1.5 ± 0.3 | 1.0 ± 0.3 |
| 40% PE-oleate | 2.3 ± 0.2 | 1.3 ± 0.2 |
| 50% PE-oleate | 3.1 ± 0.1 | 1.9 ± 0.1 |

See also figure 12 for a representation of these results.

Based on the results of the SFC analyses, it is concluded that 30% is the optimal concentration of PE oleate in a blend with rapeseed oil as the SFC profile of this blend is closest to that of commercial margarines. The fatty acid profile of the 30% PE oleate blend is also very similar to that of the best fat mixtures described in patent EP1 011 343 B1 (see p. 12 Table 4 Blends 1 and 2). On the basis of extrapolation of these data, a blend with 25% PE oleate will also be suitable for the production of margarine.

Via DSC the influence of the type of liquid fat in the blends with PE-oleate was tested, but this proved to have no effect on the thermal properties (results not shown). So instead of rapeseed oil, for example, sunflower oil could also be used. Blends with a PE oleate concentration of 20% or lower can be used with addition of an additional type of fat that serves as hardstock.

Instead of oleic acid, the plant sterols could also be esterified with the fatty acids of a commercial fat such as olive oil, high-oleic sunflower oil, high-oleic soybean oil, high-oleic safflower oil or high-oleic canola oil. The SFC fat blending profile may then differ slightly due to a small difference in fatty acid profile between PE oleate and the commercially available high-oleic oils. For example because high-oleic sunflower oil contains approximately 10% linoleic acid and 80% oleic acid, the SFC profile of fat blends is expected to be slightly lower than that of blends with PE oleate. The same is true for high-oleic safflower oil which contains about 78% oleic acid and 13% linoleic acid. On the other hand since the percentage of saturated fatty acids in the fatty acid composition of olive oil is about 13% and of high-oleic soybean oil is about 9%, the SFC fat blend profiles are expected to be slightly higher than that of the PE oleate blends. This is demonstrated in the examples below.

### Example 4: Sterol esters as texturizing agent

Two different types of fats with a high oleic acid content (at least 70%) were used for esterification of wood sterol: olive oil and high-oleic sunflower oil. The purity of the synthesized sterol esters was more than 99% as determined by H-NMR. The sterol esters contained no free sterols and only a very small amount of free fatty acids as is shown in Table 6. The determination of total free fatty acid content was done by the formation of dimethylamide derivatives from the free fatty acids and subsequent separation and detection with GC-FID, as described by Gheysen et al. (Food Chemistry 2018, 441-450). The determination of total free fatty acids was performed in triplicate.

**Table 6. Mean total free fatty acid content of the different sterol esters with standard deviation.**

| **Sterol ester type** | **Total free fatty acids (%)** |
|---|---|
| Sterol esters with fatty acids derived from high oleic sunflower oil | 0,64 ± 0,06 |
| Sterol esters with fatty acids derived from olive oil | 0,56 ± 0,05 |

**Table 7. Fatty acid composition of the different types of sterol esters, palm oil and palm stearin**

| **Fatty acid** | **Sterol esters with fatty acids derived from high oleic sunflower oil** | **Sterol esters with fatty acids derived from olive oil** | **Palm oil** | **Palm stearin** |
|---|---|---|---|---|
| C14:0 | **-** | **-** | - | 1,2 |
| C16:0 | 3,5 | 11,6 | 45,4 | 61,5 |
| C18:0 | 2,5 | 2,6 | 4,3 | 4,2 |
| C18:1 | 86,6 | 76,4 | 39,6 | 26,9 |
| C18:2 | 5,7 | 6,5 | 9,8 | 5,5 |
| C24:1 | 1,3 | 6,5 | - | 0,6 |
| other | 0,5 | 1,7 | 1,0 | - |

| | | | | |
|---|---|---|---|---|
| Determined according to the method by Ryckebosch et al (2012) cited above. The values show the average of three measurements. The error is 0.2%. | | | | |

The fatty acid composition of the sterol esters with fatty acids derived from high oleic sunflower oil and olive oil were highly unsaturated both containing more than 70% oleic acid. On the contrary, palm oil and palm stearin contain much more saturated fatty acids. The saturated fatty acid content in palm oil is almost 50% and in palm stearin it even mounted up to 67%.

**Table 8. Sterol composition of sterol esters with fatty acids derived from high oleic sunflower oil and olive oil**

| **Sterol** | **Content (%)** |
|---|---|
| β-sitosterol | 75 |
| campesterol | 10 |
| other | 15 |

**Table 9 fat content (SFC) of sterol esters, palm oil and palm stearin**

| **Sample** | **0°C** | **10°C** | **20°C** |
|---|---|---|---|
| Palm oil | 77,1 ± 0,2 | 57,6 ± 0,5 | 21,7 ± 1,2 |
| Palm stearin | 89,2 ± 0,3 | 83,4 ± 0,3 | 66,8 ± 0,1 |
| Sterol esters with fatty acids derived from high oleic sunflower oil | 94,5 ± 0,1 | 91,3 ± 0,1 | 70,4 ± 0,1 |
| Sterol esters with fatty acids derived from olive oil | 94,0 ± 0,2 | 89,4 ± 0,1 | 66,4 ± 0,2 |

| **Sample** | **30°C** | **35°C** |
|---|---|---|
| Palm oil | 4,0 ± 1,5 | 1,0 ± 0,9 |
| Palm stearin | 39,2 ± 0,5 | 32,9 ± 0,3 |
| Sterol esters with fatty acids derived from high oleic sunflower oil | 7,8 ± 0,3 | 4,2 ± 0,2 |
| Sterol esters with fatty acids derived from olive oil | 21,4 ± 0,9 | 16,6 ± 0,8 |

| **Sample** | **40°C** | **45°C** |
|---|---|---|
| Palm oil | 0,0 ± 0,0 | 0,0 ± 0,0 |
| Palm stearin | 25,7 ± 0,2 | 17,4 ± 0,4 |
| Sterol esters with fatty acids derived from high oleic sunflower oil | 1,3 ± 0,1 | 0,0 ± 0,0 |
| Sterol esters with fatty acids derived from olive oil | 12,8 ± 0,5 | 8,3 ± 0,6 |

| | | |
|---|---|---|
| The values show the mean value ± standard deviation of three replicates. The SFC was determined according to AOCS method Cd16b-93 (direct method) for non-stabilizing fats as explained above These data are also presented in figure 13. | | |

At each temperature the SFC of both types of sterol esters was higher than that of palm oil. This result is very unexpected since palm oil contains much more saturated fatty acids than the sterol esters. Moreover up to a temperature of 20°C the SFC of the sterol esters is similar to that of palm stearin which contains even more saturated fatty acids than palm oil. The SFC profiles of the sterol esters, and especially the sterol esters with fatty acids derived from high oleic sunflower oil are much steeper than the SFC profile of palm stearin, especially in the temperature region between 20°C and 30°C. This has the advantage that the remaining SFC at temperatures above 37°C is lower for the sterol esters than for palm stearin. The sterol esters with fatty acids derived from high oleic sunflower oil are already almost completely melted at 40°C warranting no waxy mouthfeel in blends with a liquid fat in any concentration. The SFC at temperatures above 37°C of sterol esters with fatty acids derived from olive oil is higher than that of sterol esters with fatty acids derived from high oleic sunflower oil, probably because the former contains a higher-melting sterol ester fraction composed of saturated fatty acid esters of sterols.

Since the sterol esters with fatty acids derived from high oleic sunflower oil or olive oil have an SFC profile which is very similar to that of conventional hardstock (palm oil and palm stearin) it can be concluded that they can be used in blends with a liquid fat as a replacement for the conventional hardstock.

Texture analyses of the different types of sterol esters and of palm oil and palm stearin was performed using a Texture Analyzer (Lloyd Instruments model LF plus) equipped with a 100 N load cell and a cylindrical probe (6 mm diameter). Plastic cans with a diameter of 30 mm and a height of 70 mm were filled with 11.5 g sample. The samples were then melted at 80°C for 30 min and thereafter put in a water bath at 10°C for rapid cooling. The samples were kept at 10°C for 72h to bring them in a kinetically stabilized state. After this tempering force-distance deformation curves of the samples were obtained by forcing the probe to penetrate the sample at a constant speed of 10 mm/min to a distance of 10 mm. The hardness of the lipid is defined as the maximum force required to penetrate the sample.

**Table 10 : Hardness of different types of sterol esters, palm oil and palm stearin**

| **Lipid** | **Hardness (N)** |
|---|---|
| Sterol esters with fatty acids derived from high oleic sunflower oil | 85,4 ± 3,7 ^{a} |
| Sterol esters with fatty acids derived from high oleic sunflower oil | 86,0 ± 2,6 ^{a} |
| Palm stearin | 94,3 ± 2,2 ^{b} |
| Palm oil | 23,9 ± 0,6 ^{c} |

| | |
|---|---|
| The values show the mean ± standard deviation of four replicates. Values with a different letter in the superscript were significantly different as demonstrated by one-way ANOVA combined with Tukey test. | |

The results show that at 10°C both types of sterol esters were almost four times harder than palm oil. This is a surprising result since at 10°C the SFC of the sterol esters was only almost two times higher than the SFC of palm oil. Moreover, the hardness of both sterol esters was similar to that of palm stearin. Thus, a highly unsaturated lipid was created with the same hardness as a highly saturated fat, something which has not been reported before. In fact, this result goes against all current "rules" of fat crystallization.

Despite their difference in fatty acid profile the hardness at 10°C of both sterol esters was not significantly different. This has the advantage that the same hardness can be obtained with sterol esters derived from high oleic sunflower oil as with sterol esters derived from olive oil, but with a lower amount of saturated fatty acids.

### Example 5: Lipid blends containing texturizing agents according to the invention

Several lipid blends were prepared of the different types of sterol esters with different weight ratios of the sterol esters and rapeseed oil and without hardstock. The weight ratios of the different lipid blends are shown below.
Lipid blend 1: 20 % sterol ester with fatty acids derived from high oleic sunflower oil, 80% rapeseed oil.
Lipid blend 2: 25 % sterol ester with fatty acids derived from high oleic sunflower oil, 75% rapeseed oil.
Lipid blend 3: 30 % sterol ester with fatty acids derived from high oleic sunflower oil, 70% rapeseed oil.
Lipid blend 4: 35 % sterol ester with fatty acids derived from high oleic sunflower oil, 65% rapeseed oil.
Lipid blend 5: 40 % sterol ester with fatty acids derived from high oleic sunflower oil, 60% rapeseed oil.
Lipid blend 6: 45 % sterol ester with fatty acids derived from high oleic sunflower oil, 55% rapeseed oil.
Lipid blend 7: 20 % sterol ester with fatty acids derived from olive oil, 80% rapeseed oil.
Lipid blend 8: 25 % sterol ester with fatty acids derived from olive oil, 75% rapeseed oil.
Lipid blend 9: 30 % sterol ester with fatty acids derived from olive oil, 70% rapeseed oil.
Lipid blend 10: 35 % sterol ester with fatty acids derived from olive oil, 65% rapeseed oil.
Lipid blend 11: 40 % sterol ester with fatty acids derived from olive oil, 60% rapeseed oil.
Lipid blend 12: 45 % sterol ester with fatty acids derived from olive oil, 55% rapeseed oil.

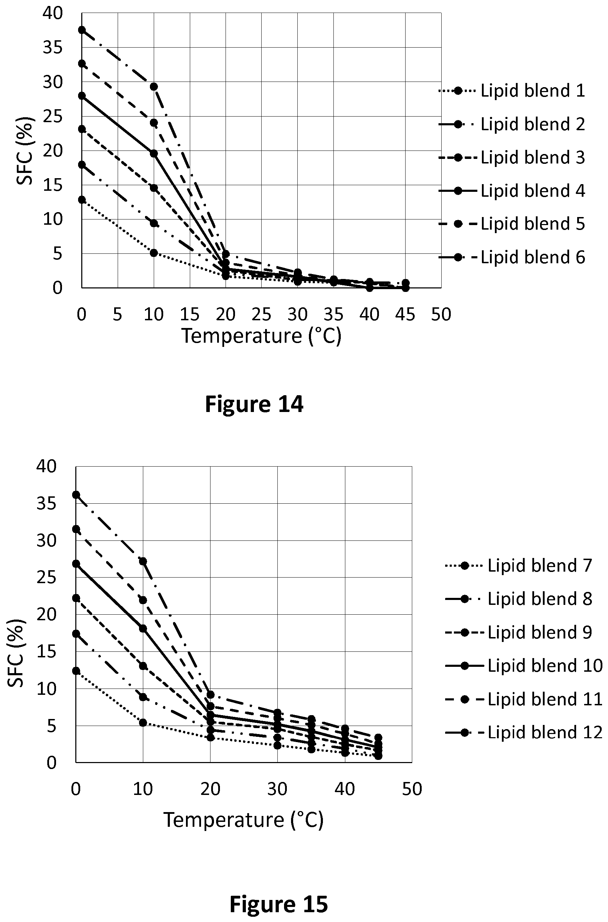

The solid fat content (SFC) was determined for the different lipid blends and for different commercial margarines. Table 11 shows the results as the mean ± standard deviation of three replicates. The SFC was determined according to AOCS method Cd16b-93 (direct method) for non-stabilizing fats as explained above. Figures 14 and 15 also show the SFC profiles of the different lipid blends containing sterol esters derived from high oleic sunflower oil and olive oil respectively. The SFC profiles of the commercial margarines are displayed in Figure 12.

**Table 11: Solid fat content (SFC) of different lipid blends and different commercial margarines.**

| **Lipid blend** | **0°C** | **10°C** | **20°C** | **30°C** |
|---|---|---|---|---|
| | | | | |
| 1 | 12,8 ± 0,2 | 5,1 ± 0,2 | 1,7 ± 0,1 | 0,9 ± 0,1 |
| 2 | 18,0 ± 0,3 | 9,4 ± 0,4 | 2,1 ± 0,1 | 1,3 ± 0,0 |
| 3 | 23,2 ± 0,2 | 14,6 ± 0,4 | 2,6 ± 0,0 | 1,2 ± 0,2 |
| 4 | 27,9 ± 0,3 | 19,6 ± 0,1 | 2,8 ± 0,5 | 1,6 ± 0,1 |
| 5 | 32,6 ± 0,7 | 24,1 ± 0,4 | 3,7 ± 0,2 | 1,8 ± 0,1 |
| 6 | 37,5 ± 0,1 | 29,3 ± 0,1 | 4,9 ± 0,3 | 2,2 ± 0,2 |
| 7 | 12,4 ± 0,2 | 5,4 ± 0,1 | 3,4 ± 0,4 | 2,3 ± 0,6 |
| 8 | 17,4 ± 0,1 | 8,9 ± 0,2 | 4,4 ± 0,3 | 3,4 ± 0,2 |
| 9 | 22,2 ± 0,0 | 13,1 ± 0,8 | 5,5 ± 0,1 | 4,6 ± 0,1 |
| 10 | 26,8 ± 0,1 | 18,1 ± 0,2 | 6,5 ± 0,2 | 5,2 ± 0,2 |
| 11 | 31,5 ± 0,1 | 21,9 ± 0,9 | 7,6 ± 0,1 | 6,0 ± 0,1 |
| 12 | 36,2 ± 0,1 | 27,1 ± 0,1 | 9,2 ± 0,3 | 6,7 ± 0,3 |
| Benecol ^{™} | 17,4 ± 0,4 | 11,8 ± 0,5 | 6 ± 0,2 | 3 ± 0,2 |
| Becel Original ^{™} | 13,3 ± 0,1 | 10,7 ± 0,5 | 6,8 ± 0,3 | 3,5 ± 0,3 |
| Becel Pro Activ ^{™} | 14,5 ± 0,3 | 12 ± 0,2 | 7,4 ± 0,2 | 3,5 ± 0,4 |

| **Lipid blend** | **35°C** | **40°C** | **45°C** | |
|---|---|---|---|---|
| 1 | 0,8 ± 0,3 | 0,0 | 0,0 | |
| 2 | 1,0 ± 0,1 | 0,0 | 0,0 | |
| 3 | 1,1 ± 0,2 | 0,7 ± 0,2 | 0,0 | |
| 4 | 0,8 ± 0,1 | 0,0 | 0,0 | |
| 5 | 0,9 ± 0,1 | 0,8 ± 0,2 | 0,0 | |
| 6 | 1,2 ± 0,0 | 0,8 ± 0,2 | 0,7 ± 0,2 | |
| 7 | 1,8 ± 0,4 | 1,3 ± 0,1 | 0,9 ± 0,1 | |
| 8 | 2,6 ± 0,2 | 1,9 ± 0,2 | 1,0 ± 0,1 | |
| 9 | 3,5 ± 0,2 | 2,5 ± 0,1 | 1,7 ± 0,2 | |
| 10 | 4,3 ± 0,2 | 3,1 ± 0,2 | 2,1 ± 0,1 | |
| 11 | 5,1 ± 0,1 | 4,0 ± 0,1 | 2,5 ± 0,4 | |
| 12 | 5,9 ± 0,2 | 4,6 ± 0,2 | 3,4 ± 0,2 | |
| Benecol ^{™} | 1,7 ± 0,1 | 0,7 ± 0,3 | 0,7 ± 0,1 | |
| Becel Original^{™} | 1,8 ± 0,5 | 0,9 ± 0,1 | 0,7 ± 0,1 | |
| Becel Pro Activ^{™} | 1,5 ± 0,1 | 0,5 ± 0,1 | 0,7 ± 0,3 | |

The obtained SFC profiles clearly indicate that lipid blends 1 through 12 can be used for the production of lipid-containing food products in which solid fat is needed to give structure to the final food product. In general, at each temperature, the lipid blends containing sterol esters with fatty acids derived from high oleic sunflower oil had a slightly lower SFC than lipid blends with the same concentration of sterol esters with fatty acids derived from olive oil. This was expected since the fatty acid composition of sterol esters with fatty acids derived from high oleic sunflower contain less saturated fatty acids than sterol esters with fatty acids derived from olive oil.

By comparing with the SFC profiles of the commercial margarines it can be concluded that lipid blends 2 through 9 are very suitable for use in ordinary table margarines and spreads. Lipid blend 1 is probably too soft for use in spreadable table margarines and spreads. Lipid blends 10 through 12 will probably cause a waxy aftertaste in the mouth when used in spreadable table margarines since the SFC at temperatures above 30°C is too high in these lipid blends (Miskandar et al. (2005) Asia Pac J Clin Nutr. 14, 387-395). These lipid blends could however still be used in other types of margarines like for example puff pastry margarine where such higher SFC values at temperatures above 37°C do not cause an undesirable mouthfeel.

It can thus be concluded that the typical concentration to obtain the desired texture in spreadable table margarine is 20 to 35% sterol esters with fatty acids derived from olive oil or 25-45% sterol esters with fatty acids derived from high oleic sunflower oil.

### Example 6: Preparation of a soft table spread containing sterol esters rich in oleic acid

Soft table spread is prepared that contains the different types of sterol esters rich in oleic acid from example 4. A model soft table spread with a typical formulation is prepared containing liquid oil (e.g. rapeseed oil), sterol esters rich in oleic acid and emulsifiers (0.4% mono- and diglycerides and 0.2% soy lecithin) in the lipid phase and 1.5 to 2.5% table salt and 0.01% preservative (e.g. potassium sorbate) in the water phase. In accordance with the typical production process of a spread the lipid phase is first prepared by blending the fully melted sterol esters with the liquid oil while heating and subsequently adding the emulsifiers. The aqueous phase is prepared separately by dissolving the salt and the preservative in water. Then the emulsion is made by mixing the lipid and the aqueous phase at a temperature of about 43°C. Optionally the emulsion is pasteurized to avoid microbial contamination. The emulsion is then passed through a scraped surface heat exchanger (SSHE) to induce lipid crystallization and subsequently through a pin-worker where the cooled emulsion completes its crystallization and where the desired texture of the margarine is formed. Finally the margarine is filled in tubs [Miskandar (2005) Asia Pac. J. Clin. Nutr., 14, 387-395].

The sterol ester concentration in the fat phase of the margarines is determined by the total amount of lipid phase in the margarine and on the advised daily intake range of phytosterols. Four types of margarines are prepared with a different lipid content. Table 12 shows the sterol ester and rapeseed oil content of the lipid phase of the different spreads which depends on the total lipid content. The sterol ester content of the spreads was targeted at 20g/100g, which corresponds to a sterol content of 12g/100g and which ensures a daily intake of 2.4 g sterols when the margarine consumption is 20g/day. For example, if the lipid phase contains 33% sterol esters, a medium-fat margarine consisting of 60% lipid phase would provide a sufficiently high daily phytosterol dosis if 20g margarine is consumed each day.

**Table 12. Lipid content and sterol ester and rapeseed oil content of the lipid phase of the different spreads**

| **spread** | **Lipid content (g/100g product)** | **Sterol ester content (g/100g product)** | **Sterol ester content (g/100g lipids)** | **rapeseed oil (g/100g)** |
|---|---|---|---|---|
| A | 60 | 20 | 33 | 40 |
| B | 50 | 20 | 40 | 30 |
| C | 40 | 20 | 50 | 20 |
| D | 30 | 20 | 66 | 10 |

Table 13 shows the saturated fatty acid content of the different spreads depending on the oil type used for the sterol ester synthesis and taking into account the lipid composition of the spreads and the fatty acid composition of the sterol esters and rapeseed oil. of It should be noted that the spreads are palm oil-free and will contain less than 3.5g saturated fatty acids per 100g product, whereas similar products currently on the market still contain 7 up to 17g saturated fatty acids per 100g product.

**Table 13. Saturated fatty acid content of the different spreads (%)**

| **Oil type used for sterol ester synthesis** | **A** | **B** | **C** | **D** |
|---|---|---|---|---|
| olive oil | 3.5 | 2.8 | 2.2 | 1.6 |
| high oleic sunflower oil | 3.1 | 2.5 | 1.9 | 1.2 |

As is frequently done in other studies, the spread is first prepared on small scale (about 1l) using an ice-cream maker, which is in fact a SSHE and is very inexpensive and easy to use and allows optimization of the recipe [Shah (2014) J. Am. Oil Chem. Soc. 91, 309-316; Saadi (2012) Food Chem. 133, 1485-1493; Pande (2013) Biocatal. Agric. Biotechnol. 2, 76-84.]. The macroscopic properties such as hardness and spreadability of the prepared margarines is analyzed after one week of storage at 4°C using a texture analyzer and compared to the same properties of commercial margarines [Steen (2014) Food Bioprocess Technol. 7, 2855-2864]. The spreads are also subjected to a thermal and morphological analysis (using X-ray and microscopic procedures) in view of gaining mechanistic insights. Furthermore the droplet size of the spreads is determined using pNMR. In a next step the spreads are produced on pilot scale (25 l). A pilot plant for margarine production which has the advantage that it also contains a pin-worker next to a SSHE is used for the spread production.

## Claims

1. A fat blend wherein the combination of phytosterolester, liquid oil and hardstock in the fat fraction consist of:
- 10-50% of a phytosterol ester comprising at least 65% phytosterol oleate,
- 0-20% hardstock,
- liquid oil up to 100%,
wherein the amount of saturated fatty acids in the fat fraction is between 0 to 20 % of the total fatty acid content, and wherein the fat blend comprises solid fat at 20°C.

2. The fat blend according to claim 1, wherein the phytosterol ester comprises at least 75%, or 80% phytosterol oleate.

3. The fat blend according to claim 1 or 2, wherein the hardstock comprises less than 15 %, less than 10%. or less than 5% of the fat fraction.

4. The fat blend according to claim any one of claims 1 to 3 wherein the fat fraction contains no hardstock.

5. The fat blend according to any one of claims 1 to 4, wherein the amount of saturated fatty acids in the fat fraction is below 15%, below 10 % below 5% of the total fatty acid content.

6. The fat blend according to any one of claims 1 to 5, wherein the fatty acid content of the phytosterol ester comprises less than 20% poly-unsaturated fatty acids.

7. The fat blend according to any one of claims 1 to 6, wherein the liquid oil is olive oil.

8. Use of a fat blend according to any one of claims 1 to 7, in the preparation of a food product selected from the group consisting of a spreadable emulsion, a shortening, a dairy product, a vegetable oil-based dairy alternative, a bakery product and a processed meat product.

9. The use according to claim 8, in the preparation of an edible emulsion.

10. The use according to claim 8 or 9, in the preparation of a margarine.

11. An edible spreadable emulsion comprising between 10 and 90% (w/v) of the fat blend as claimed in any one of claims 1 to 7.

12. The edible spreadable emulsion as claimed in claim 11, further comprising monoglycerides, diglycerides and/or polyglycerol polyricinoleate (PGPR).

13. The edible spreadable emulsion as claimed in claim 11 or 12, further comprising salt, proteins, sugar, preservatives, flavourings and/or stabilizers.

## Patentansprüche

1. Fettmischung, wobei die Kombination aus Phytosterolester, flüssigem Öl und hochschmelzender Fettkomponente in der Fettfraktion besteht aus:
- 10-50 % eines Phytosterolesters, umfassend zu mindestens 65 % Phytosterololeat,
- 0-20 % hochschmelzender Fettkomponente,
- flüssigem Öl bis zu 100 %,
wobei die Menge an gesättigten Fettsäuren in der Fettfraktion zwischen 0 und 20 % des Gesamtfettsäuregehalts beträgt und wobei die Fettmischung bei 20 °C festes Fett umfasst.

2. Fettmischung nach Anspruch 1, wobei der Phytosterolester zu mindestens 75 % oder 80 % Phytosterololeat umfasst.

3. Fettmischung nach Anspruch 1 oder 2, wobei die hochschmelzende Fettkomponente zu weniger als 15 %, weniger als 10 % oder weniger als 5 % die Fettfraktion umfasst.

4. Fettmischung nach einem der Ansprüche 1 bis 3, wobei die Fettfraktion keine hochschmelzende Fettkomponente enthält.

5. Fettmischung nach einem der Ansprüche 1 bis 4, wobei die Menge an gesättigten Fettsäuren in der Fettfraktion unter 15 %, unter 10 %, unter 5 % des Gesamtfettsäuregehalts liegt.

6. Fettmischung nach einem der Ansprüche 1 bis 5, wobei der Fettsäuregehalt des Phytosterolesters weniger als 20 % mehrfach ungesättigte Fettsäuren umfasst.

7. Fettmischung nach einem der Ansprüche 1 bis 6, wobei das flüssige Öl Olivenöl ist.

8. Verwendung einer Fettmischung nach einem der Ansprüche 1 bis 7 bei der Herstellung eines Nahrungsmittelprodukts, das aus der Gruppe ausgewählt ist, bestehend aus einer streichfähigen Emulsion, einem Backfett, einem Milchprodukt, einer Milchalternative auf Pflanzenölbasis, einem Backprodukt und einem verarbeiteten Fleischprodukt.

9. Verwendung nach Anspruch 8 bei der Herstellung einer essbaren Emulsion.

10. Verwendung nach Anspruch 8 oder 9 bei der Herstellung einer Margarine.

11. Essbare, streichfähige Emulsion, umfassend zu zwischen 10 und 90 % (Gew./Vol.) die Fettmischung nach einem der Ansprüche 1 bis 7.

12. Essbare, streichfähige Emulsion nach Anspruch 11, ferner umfassend Monoglyceride, Diglyceride und/oder Polyglycerinpolyricinoleat (PGPR).

13. Essbare, streichfähige Emulsion nach Anspruch 11 oder 12, ferner umfassend Salz, Proteine, Zucker, Konservierungsmittel, Geschmacksstoffe und/oder Stabilisatoren.

## Revendications

1. Mélange de matières grasses dans lequel la combinaison d'ester de phytostérol, d'huile liquide et de matière grasse à point de fusion élevé dans la fraction de matière grasse consiste en :
- 10 à 50 % d'un ester de phytostérol comprenant au moins 65 % d'oléate de phytostérol,
- 0 à 20 % de matière grasse à point de fusion élevé,
- de l'huile liquide jusqu'à 100 %,
dans lequel la quantité d'acides gras saturés dans la fraction de matière grasse va de 0 à 20 % de la teneur totale en acide gras, et dans lequel le mélange de matières grasses comprend de la matière grasse solide à 2θ °C.

2. Mélange de matières grasses selon la revendication 1, dans lequel l'ester de phytostérol comprend au moins 75 % ou 80 % d'oléate de phytostérol.

3. Mélange de matières grasses selon la revendication 1 ou 2, dans lequel la matière grasse à point de fusion élevé comprend moins de 15 %, moins de 10 % ou moins de 5 % de la fraction de matière grasse.

4. Mélange de matières grasses selon l'une quelconque des revendications 1 à 3 dans lequel la fraction de matière grasse ne contient aucune matière grasse à point de fusion élevé.

5. Mélange de matières grasses selon l'une quelconque des revendications 1 à 4, dans lequel la quantité d'acides gras saturés dans la fraction de matière grasse est inférieure à 15 %, inférieure à 10 %, inférieure à 5 % de la teneur totale en acide gras.

6. Mélange de matières grasses selon l'une quelconque des revendications 1 à 5, dans lequel la teneur en acide gras de l'ester de phytostérol comprend moins de 20 % d'acides gras polyinsaturés.

7. Mélange de matières grasses selon l'une quelconque des revendications 1 à 6, dans lequel l'huile liquide est de l'huile d'olive.

8. Utilisation d'un mélange de matières grasses selon l'une quelconque des revendications 1 à 7, dans la préparation d'un produit alimentaire choisi dans le groupe constitué par une émulsion pouvant être étalée, une graisse émulsifiable, un produit laitier, un substitut laitier à base d'huile végétale, un produit de boulangerie et un produit de viande transformé.

9. Utilisation selon la revendication 8, dans la préparation d'une émulsion comestible.

10. Utilisation selon la revendication 8 ou 9, dans la préparation d'une margarine.

11. Émulsion comestible pouvant être étalée comprenant entre 10 et 90 % (poids/volume) du mélange de matières grasses selon l'une quelconque des revendications 1 à 7.

12. Émulsion comestible pouvant être étalée selon la revendication 11, comprenant en outre des monoglycérides, des diglycérides et/ou du polyricinoléate de polyglycérol (PGPR).

13. Émulsion comestible pouvant être étalée selon la revendication 11 ou 12, comprenant en outre du sel, des protéines, du sucre, des conservateurs, des arômes et/ou des stabilisants.
